# EUROPÄISCHE PATENTSCHRIFT

(11) **EP 1 184 601 B1**
(45) Veröffentlichungstag und Bekanntmachung des Hinweises auf die Patenterteilung: **26.03.2003**
(21) Anmeldenummer: 01113866.6
(22) Anmeldetag: 07.06.2001
(51) Int. Cl.: F16H 55/17, F16H 55/00, F16H 55/14

(54) **Zahnrad**
Gearwheel
Roue dentee

(30) Priorität: 24.08.2000 DE 10041696
(43) Veröffentlichungstag der Anmeldung: 06.03.2002
(73) Patentinhaber: H. B. SEISSENSCHMIDT AG, 58840 Plettenberg (DE)
(72) Erfinder: Bauseler, Siegbert, 57399 Kirchhundem (DE)
(74) Vertreter: Schröter & Haverkamp

(56) Entgegenhaltungen:
- DE-C- 908 317
- US-A- 3 371 549
- PATENT ABSTRACTS OF JAPAN vol. 012, no. 267 (M-722), 26. Juli 1988 (1988-07-26) & JP 63 047563 A (HITACHI LTD), 29. Februar 1988 (1988-02-29)

## Beschreibung

Die Erfindung betrifft ein Zahnrad nach dem Oberbegriff des Anspruchs 1.

Aus der japanischen Offenlegungsschrift 63-47563 sind einstückig aus Kunststoff geformte Zahnräder der gattungsgemäßen Art bekannt, bei denen der äußere Zahnkranz und die Nabe durch beabstandete speichenartige Stege miteinander verbunden sind, die jeweils abwechselnd zu beiden Seiten der gedachten Mittelebene durch das Zahnrad in gleichmäßiger Verteilung am Zahnkranz und an der Nabe angebunden sind. Im Querschnitt sind diese Stege etwa rechteckig. Zahnräder dieser Art lassen sich nur aus Kunststoff im Spritzgußverfahren herstellen, da die Entformung solcher Werkstücke schwierig ist.

Aus der DE-PS 908 317 sind Rohlinge für Zahnräder bekannt, die aus Preßstoffen herstellbar sein sollen. Dabei sind der äußere Zahnkranz und die Nabe durch eine vollständig geschlossene, scheibenförmige Stegzone verbunden. Diese scheibenartige Stegzone besteht vorzugsweise aus wechselseitig gewölbten Kreissektoren, die aufgrund dieser Form in unterschiedlichen Ebenen am Zahnkranz bzw. an der Nabe angebunden sind. Bei diesen Zahnrädern wird die scheibenartige Stegzone gefordert, um Festigkeitsanforderungen zu gewährleisten und Schwingungserscheinungen, die zur Geräuschführung führen können, zu vermeiden. Eine solche scheibenförmige Stegzone erfordert einen relativ hohen Materialaufwand.

Bekannt sind ebenfalls aus der US-PS 3 371 549 Zahnräder mit speichenartig ausgebildeten Stegzonen, bei denen die speichenartigen Elemente stets mittig sowohl an der Innenseite des Zahnkranzes als auch an der Nabe angebunden sind. Diese speichenartigen Stegzonen können dabei auch profiliert ausgebildet sein. Im Schmiede- oder Preßverfahren hergestellte Zahnräder dieser Art werden als Rohlinge mit Wärmebehandlungen vergütet. Dabei zeigen sich erhebliche Verzugserscheinungen zwischen Zahnkranz und Nabe, die auf die speziellen Ausbildungen der Stegzonen zurückzuführen sind.

Die Aufgabe der Erfindung besteht darin, den Stegzonenbereich eines Zahnrades aus Metall, welches im Preß- oder Schmiedeverfahren herstellbar sein soll, hinsichtlich seines Verzugsverhaltens bei Wärmevergütungsverfahren und im Hinblick auf geforderte Gewichtsreduzierungen zu optimieren.

Gelöst wird die Erfindungsaufgabe mit einem Zahnrad mit den Merkmalen des Anspruchs 1. Infolge der Anordnung und der Ausbildung der erfindungsgemäßen Stegzonen und deren entsprechende Anbindung an die Innenseite des Zahnkranzes bzw. die Außenseite der Nabe werden Verzugserscheinungen bei Wärmebehandlungen entsprechend der im Schmiede- bzw. im Gußverfahren hergestellter Zahnradrohlinge aus Metall weitgehend vermieden. Die sich ergebenden Festigkeiten aufgrund der geometrischen Ausbildungen der Stegzonen ermöglichen die gewünschten Optimierung der Gewichte solcher Zahnräder.

Erhöht werden die Festigkeitseigenschaften zusätzlich durch Ausbildung der erfindungsgemäßen Zahnräder gemäß Anspruch 2.

Anhand eines abgebildeten Ausführungsbeispiels wird die Erfindung im folgenden näher erläutert.

Es zeigen:

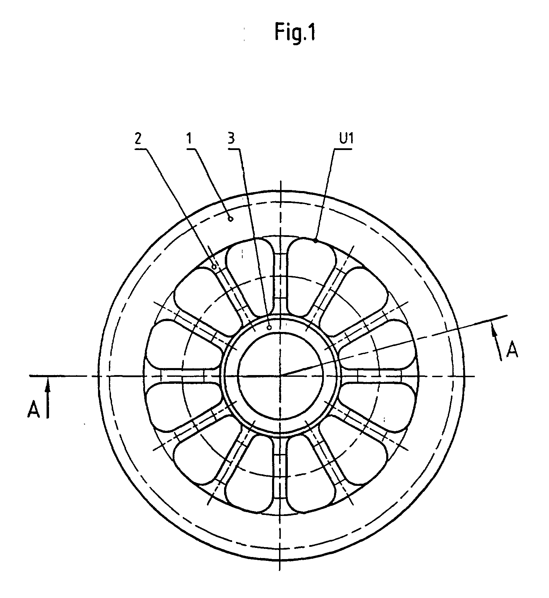

- **Fig. 1:**: eine Ansicht eines Zahnrades,
- **Fig. 2:**: einen Schnitt nach der Linie A-A in Figur 1 und
- **Fig. 3:**: die Abwinklung eines Kreisschnittes gemäß der Schnittlinie U in Figur 1.

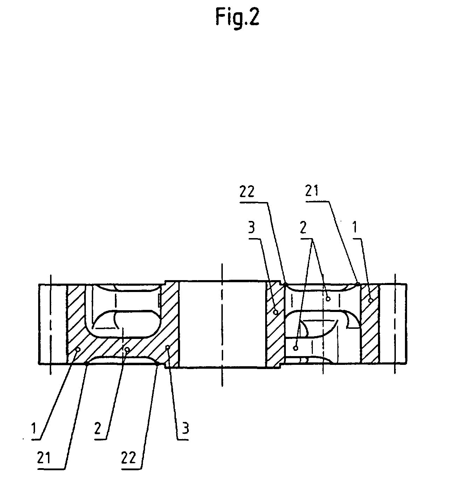

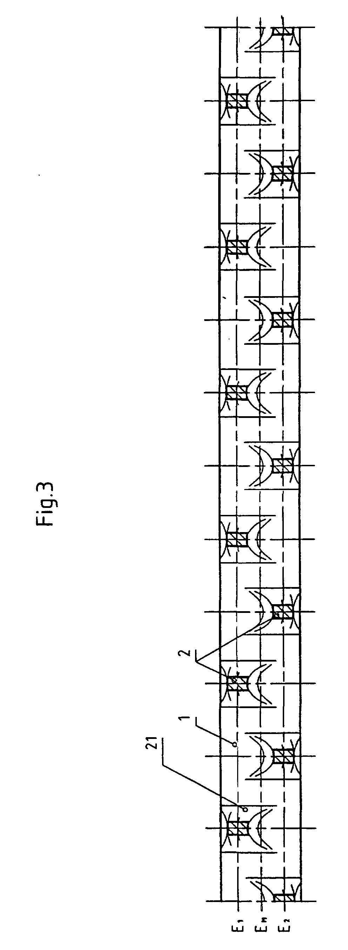

Die Nabe 3 und der Außenzahnkranz 1 sind einstückig verbunden durch speichenartige Stege 2. Wie insbesondere aus den Figuren 2 und 3 ersichtlich, sind diese Stege jeweils abwechselnd in gleichmäßiger Umfangsverteilung in einer zur Mittelebene E_{M} parallelen Ebene E₁ bzw. E₂ angeordnet. Die Stege haben dabei einen Abstand zur Mittelebene E_{M}. Gebildet sind diese Stege 2 als Abschnitt einer den Zahnkranz 1 innen und die Nabe 3 außen verbindenden gedachten Scheibe, die in Umfangsrichtung als periodische Kreisfunktion profiliert ist. Dabei sind diese Stege 2 jeweils in den Maximalamplitudenbereichen der Kreisfunktion gebildet.

Die Anbindung der Stege 2 sowohl an der Innenseite des Außenzahnkranzes 1 als auch an der Außenseite der Nabe 3 ist mit verbreiterten Übergangsbereichen 21 bzw. 22 vorgesehen.

## Patentansprüche

1. Zahnrad bestehend aus einem äußeren Zahnkranz (1), einer Nabe (3) und den Zahnkranz (1) und die Nabe (3) einstückig verbindenden speichenartigen Stegen (2), die jeweils abwechselnd beabstandend zu beiden Seiten der Mittelebene (Eₘ) in gleichmäßiger Umfangsverteilung angeordnet am Zahnkranz (1) und an der Nabe (3) angebunden sind, wobei die Stege (2) jeweils Abschnitte einer den Zahnkranz (1) und die Nabe (3) verbindenden gedachten Scheibe sind, **dadurch gekennzeichnet, daß** die gedachte Scheibe in Umfangsrichtung als periodische Kreisfunktion profiliert ist, wobei die Stege (2) jeweils in den Maximalamplitudenbereichen der Kreisfunktion ausgebildet sind.

2. Zahnrad nach Anspruch 1, **dadurch gekennzeichnet, daß** die Stege (2) unmittelbar mit verbreiterten Übergangsbereichen (21, 22) sowohl an der Nabe (3) als auch an der Innenseite des Zahnkranzes (1) angebunden sind.

## Claims

1. Toothed wheel, comprising an outer toothed rim (1), a hub (3) and spoke-like webs (2), which integrally connect the toothed rim (1) and the hub (3 and are each connected to the toothed rim (1) and the hub (3) disposed in a uniform circumferential distribution on both sides of the central plane (Eₘ) with alternate spacings therebetween, the webs (2) each being portions of an imaginary disc which connects the toothed rim (1) and the hub (3), **characterised in that**, when viewed with respect to the circumferential direction, the imaginary disc is profiled as a periodic circular function, the webs (2) each being provided within the maximum amplitude ranges of the circular function.

2. Toothed wheel according to claim 1, **characterised in that** the webs (2) are directly connected to both the hub (3) and the inside of the toothed rim (1) by means of widened transition regions (21, 22).

## Revendications

1. Roue dentée constituée d'une couronne dentée extérieure (1), d'entretoises en forme de rayons (2) qui relient la couronne dentée (1) et le moyeu (3) pour en faire une seule pièce, qui sont disposées de manière alternée, à intervalles réguliers, de part et d'autre du plan central (Eₘ), selon une répartition régulière sur la couronne dentée (1) et le moyeu (3), sachant que ces entretoises (2) sont des sections d'un disque conçu pour relier l'intérieur de la couronne dentée (1) et le moyeu (3), **caractérisée en ce que** ce disque prévu soit, dans le sens de son pourtour, profilé en tant que fonction circulaire périodique, sachant que les entretoises (2) sont formées dans les zones d'amplitude maximale de la fonction circulaire.

2. Roue dentée selon la revendication 1, **caractérisée en ce que** les entretoises (2) soient directement reliées au moyeu (3) ainsi qu'à la face intérieure de la couronne dentée (1) par des zones de transition élargies (21, 22).
